**Europäisches Patentamt**

**European Patent Office**

**Office européen des brevets**

(11) Veröffentlichungsnummer: **0 195 398**

**A2**

## EUROPÄISCHE PATENTANMELDUNG

(21) Anmeldenummer: **86103596.2**

(22) Anmeldetag: **17.03.86**

(51) Int. Cl.⁴: **E 03 C 1/10**

(30) Priorität: **19.03.85 DE 8508064 U**

(43) Veröffentlichungstag der Anmeldung:
**24.09.86 Patentblatt 86/39**

(84) Benannte Vertragsstaaten:
**AT CH DE FR LI**

(71) Anmelder: **Honeywell-Braukmann GmbH**
**Hardhofweg**
**D-6950 Mosbach/Baden(DE)**

(72) Erfinder: **Vollmer, Rudolf, Dipl.-Ing.**
**Friedrich-Hölderlin-Strasse 23**
**D-6950 Mosbach(DE)**

(74) Vertreter: **Herzbach, Dieter et al,**
**Honeywell Europe S.A. Holding KG Patent- und**
**Lizenzabteilung Kaiserleistrasse 55 Postfach 184**
**D-6050 Offenbach am Main(DE)**

(54) **Ventilkombination.**

(57) Eine Ventilkombination vereinigt in sich ein Absperrventil (10) und ein Abblasventil (12). Beide Ventile weisen Schließkörper (22, 40) auf, die mit einem Ventilsitz (20) bzw. einer Auslaßdüse (42) zusammenwirken. Die Schließkörper (22, 40) stehen über einen Stößel (26, 28, 32, 34, 36) miteinander derart in Antriebsverbindung, daß bei geschlossenem Absperrventil (10) das Abblasventil (12) geöffnet ist und bei geöffnetem Absperrventil das Abblasventil geschlossen ist. Einkerbungen (34) in dem Stößel (32) stellen eine Verbindung zwischen dem Raum hinter dem Ventilsitz (20) des Absperrventils (10) und dem Raum vor der Auslaßdüse (42) des Abblasventils (12) her.

FIG. 1A

0195398

HONEYWELL-BRAUKMANN GmbH 14. März 1986

Hardhofweg 76100552 EP

D-6950 Mosbach Hz/ep

Ventilkombination

Die vorliegende Erfindung bezieht sich auf eine Ventilkombination nach dem Gattungsbegriff des Schutzanspruches 1.

Derartige Ventilkombinationen finden vorzugsweise Anwendung bei der Installation eines Rohrtrenners bekannter Bauart, wenn dieser in der sogenannten "Einbauart 2" nach DVGW-Arbeitsblatt W503 zu installieren ist. Hierbei wird gefordert, daß der Rohrtrenner nur bei tatsächlicher Wasserentnahme in Durchflußstellung geht. Außerdem ist bei Dauerentnahme über einen längeren Zeitraum dafür zu sorgen, daß Vorkehrungen getroffen werden, damit der Rohrtrenner wenigstens einmal pro Tag in Trennstellung geht. Dies kann z.B. durch den Einbau einer Schaltuhr in einen elektrischen Steuerkreis geschehen. Der Steuerkreis erregt dann zu bestimmten Zeitpunkten ein in die Zuleitung zum Rohrtrenner geschaltetes Absperrventil, wobei ein gleichzeitig erregtes Abblasventil den Rohrstrang zwischen Rohrtrenner und Absperrventil entlüftet.

Als nachteilig ist bei der zu diesem Zweck verwendeten Ventilkombination die Anordnung zweier getrennter magnetischer Ventile anzusehen, deren Spulen von dem Steuerkreis angesteuert werden.

Es ist daher die Aufgabe der vorliegenden Erfindung, eine Ventilkombination der eingangs genannten Art in ihrem Aufbau zu vereinfachen, so daß sie kostengünstiger hergestellt werden kann.

Die Lösung dieser Aufgabe gelingt gemäß den kennzeichnenden Merkmalen des Patentanspruches 1. Weitere vorteilhafte Ausgestaltungen der Ventilkombination gemäß der Erfindung

- 2 -

0195398

sind den Unteransprüchen zu entnehmen.

Anhand eines in den Figuren der beiliegenden Zeichnung dargestellten Ausführungsbeispieles sei im folgenden die Erfindung näher beschrieben. Es zeigen:

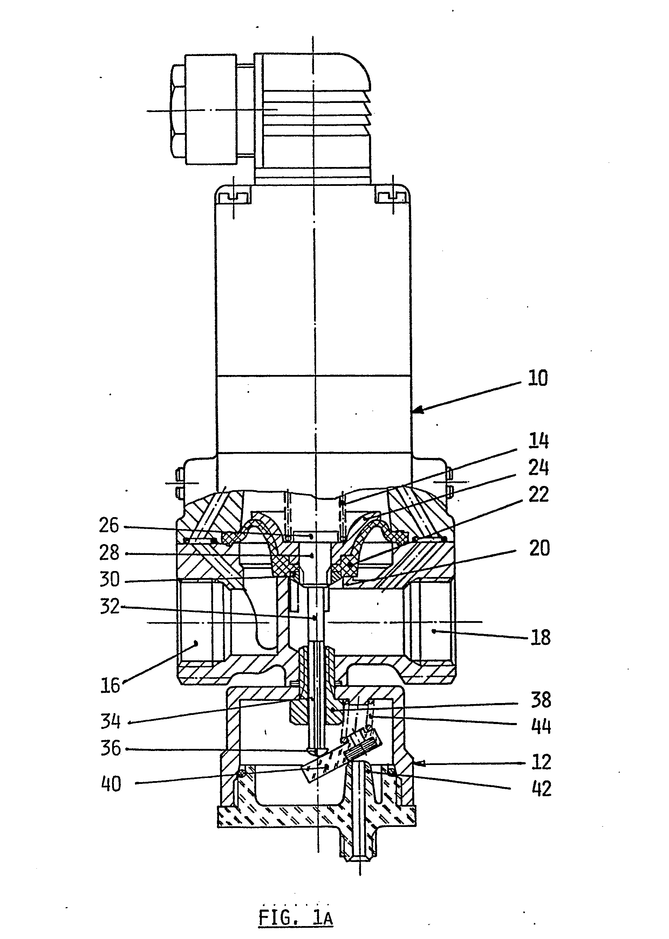

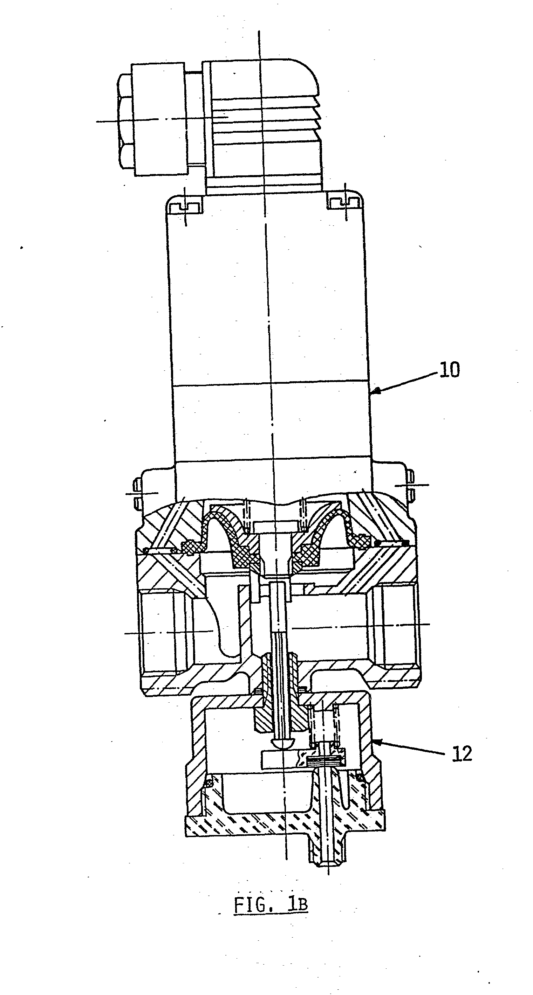

Fig. 1a die Ventilkombination bei geschlosssenem Absperrventil und geöffnetem Abblasventil; und

Fig. 1b die Ventilkombination bei geöffnetem Absperrventil und geschlossenem Abblasventil.

Gemäß den Figuren 1a und 1b, in denen gleiche Teile mit gleichen Bezugsziffern versehen sind, besteht die Ventilkombination aus einem Absperrventil 10 und einem Abblasventil 12, die beide eine an sich bekannte Bauart aufweisen können. Das Absperrventil 10 ist stromlos geschlossen (Fig. 1a) und wird bei elektrischer Erregung gegen die Kraft einer Schließfeder 14 geöffnet (Fig. 1b).

Das Absperrventil 10 weist zwischen einem Einlaßstutzen 16 und einem Auslaßstutzen 18 einen im Ventilgehäuse angeformten Ventilsitz 20 auf, an dem sich eine im Ventilgehäuse eingespannte Gummimembran 22 in der Schließstellung abstützt. Die Gummimembran 22 stützt sich an einem Ventilteller 24 ab, der an einem Bund 26 eines Gewindebolzens 28 anliegt. Eine Gewindelochscheibe 30, die mit dem Gewindebolzen 28 verschraubt ist, hält die Gummimembran 22 an dem Ventilteller 24 anliegend.

Der Gewindebolzen 28 geht nach unten in einen verjüngten Stößel 32 über, der im unteren Teil mit axial verlaufenden Einschnitten 34 versehen ist und ein abgerundetes Ende 36 aufweist.

Eine Gewindehülse 38 ist unterhalb des Ventilsitzes 20 und konzentrisch zu diesem abgedichtet in das Gehäuse des Absperrventils 10 eingesetzt, und der Stößel 32 durchgreift mit seinen axialen Einschnitten 34 diese Gewindehülse 38, so daß eine Verbindung für das Medium zwischen dem Auslaß des Absperrventils 10 und dem Gehäuse des Abblasventils 12 besteht. Hierbei ist ein nicht dargestellter Rohrtrenner in einem Rohrstrang angeordnet, der an den Auslaßstutzen 18 angeschlossen ist.

Ein als Hebel ausgebildeter Schließkörper 40 des Abblasventils 12 stützt sich einerseits an dem abgerundeten Ende 36 des Stößels 32 und andererseits auf einer in die Atmosphäre führenden Auslaßdüse 42 ab, wobei eine oberhalb der Auslaßdüse 42 an dem Schließkörper 40 angreifende Schraubenfeder 44 das Bestreben hat, den als Hebel ausgebildeten Schließkörper 40 in die Schließstellung zu bringen.

Die Auslaßdüse 42 bildet einen integralen Bestandteil eines, das Gehäuse des Abblasventils 12 abschließenden, Deckels 46. Wie man ohne weiteres erkennt, kann bei Abnahme dieses Deckels 46 das Abblasventil 12 in einfacher Weise mittels der Gewindehülse 38 an dem Absperrventil 10 befestigt werden.

Die Funktion der erfindungsgemäßen Ventilkombination ist aus den beiden Figuren ohne weiteres erkennbar. Bei nichterregtem Absperrventil 10 drückt die Schließfeder 14 den Ventilteller 24 und die Gummimembran 22 gegen den Ventilsitz 20, so daß das Absperrventil geschlossen ist. Gleichzeitig kippt in dieser Stellung der Stößel 32 den Schließkörper 40 auf der Auslaßdüse 42 gegen die Kraft der Schraubenfeder 44 nach oben, so daß bei geschlossenem Absperrventil 10 das Abblasventil 12 geöffnet ist und der Leitungsstrang zwischen Absperrventil und Rohrtrenner drucklos wird, so daß der Verschlußkolben des Rohrtrenners in seine Trennstellung fährt.

Bei Erregung der Spule des Absperrventils 10 wird der Ventilteller 24 und die Gummimembran 22 von dem Ventilsitz 20 gegen die Kraft der Schließfeder 14 abgehoben, so daß das Absperrventil geöffnet wird. Durch die gleichzeitige Aufwärtsbewegung des Stößels 32 wird der Schließkörper 40 des Abblasventils 12 freigegeben, so daß die Schraubenfeder 44 den Schließkörper 40 gegen die Auslaßdüse 42 drücken kann und das Abblasventil geschlossen ist.

Patentansprüche:

1. Ventilkombination bestehend aus einem, insbesondere elektromagnetisch betätigten, Absperrventil und einem Abblasventil, wobei beide Ventile jeweils einen mit einem Ventilsitz zusammenwirkenden Schließkörper aufweisen, d a d u r c h   g e k e n n z e i c h n e t , daß der Schließkörper (22, 24) des Absperrventils (10) mit dem Schließkörper (40) des Abblasventils (12) antriebsmäßig verbunden ist, um bei geschlossenem Absperrventil das Abblasventil zu öffnen bzw. bei geöffnetem Absperrventil das Abblasventil zu schließen.

2. Ventilkombination nach Anspruch 1, g e k e n n z e i c h n e t   d u r c h   einen mit dem Schließkörper (22, 24) des Absperrventils (10) verbundenen Stößel (26, 28, 32, 34, 36), der sich auf dem Schließkörper (40) des Abblasventils (12) abstützt.

3. Ventilkombination nach Anspruch 2, d a d u r c h g e k e n n z e i c h n e t , daß der Schließkörper (40) des Abblasventils (12) als ein sich auf einer Auslaßdüse (42) abstützender Hebel ausgebildet ist, an dem der Stößel (32, 36) versetzt zur Auslaßdüse angreift und an dem in Verlängerung der Auslaßdüse eine Druckfeder (44) angreift.

4. Ventilkombination nach Anspruch 2, d a d u r c h g e k e n n z e i c h n e t , daß das Abblasventil mittels einer in das Absperrventil eingreifenden Gewindehülse (38) an dem Absperrventil befestigt ist und daß der Stößel (32) axial verlaufende Einkerbungen (34) aufweist, um dem Medium den Übertritt von dem Absperrventil zu dem Abblasventil zu gestatten.

FIG. 1A

FIG. 1B

10

12